(19) Europäisches Patentamt
European Patent Office
Office européen des brevets

(11) EP 2 535 582 A1

(12) **EUROPEAN PATENT APPLICATION**

(43) Date of publication:
**19.12.2012 Bulletin 2012/51**

(51) Int Cl.:
**F03D 11/02** (2006.01)          **F16H 3/72** (2006.01)

(21) Application number: **12170187.4**

(22) Date of filing: **31.05.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **16.06.2011 GB 201110189**

(71) Applicant: **Rolls-Royce plc**
**London SW1E 6AT (GB)**

(72) Inventors:
• **Moore, Gareth**
  **Nottingham, Nottinghamshire NG9 1JD (GB)**
• **Mountain, Stephen**
  **Derby, DE73 8LQ (GB)**
• **Slater, Robert**
  **Derby, DE23 6BG (GB)**

(74) Representative: **Hartley, Andrew Colin et al**
**Rolls-Royce plc**
**SinB-38, P.O. Box 31**
**Derby DE24 8BJ (GB)**

(54) **An electrical generation system**

(57)     This invention relates to an electrical generation system, comprising: a differential gearbox having an output drive, an input drive and a third drive which can be driven by or drive a load in use; a generator connected to and drivable by the output drive of the differential gearbox; a variable speed primary power source connected to the input drive of the differential gearbox; a regulating electrical machine which is operable as a motor and a generator connected to the third drive of the differential gearbox; at least one switch through which power is supplied to the electrical machine from the electrical output of the generator; and, a control system which monitors the electrical condition of the generator output, the control system being configured to operate the switch so as to provide power to the electrical machine when the electrical condition falls outside a range which is defined by one or more predetermined limits, wherein the speed torque characteristic of the regulating electrical machine and the gearing of the differential gearbox is such that a rotational equilibrium is achieved between the input drive and the third drive when the electrical machine is connected to the output of the electrical generator, wherein at the point of rotational equilibrium the speed of the output shaft is reduced or increased by a predetermined amount such that the condition of the output from the generator is held within the range.

Fig.1

**Description**

This invention relates to an electrical generation system. In particular, this invention relates to a variable frequency electrical generation system which uses a differential gear box in order to decouple the speed input of a primary drive from the rotational speed of an electrical generator.

There are many electrical generating systems which are powered by a variable speed drive. These include wind and tidal power generators and electrical generators driven by gas turbine engines, for example, in aero engines. A common problem with variable speed powered electrical generation systems is that the output quality provided by the generators can have a variable voltage level or a variable frequency depending on the type of generator being used and the network which is being supplied.

One known system which addresses the variable frequency produced by a wind turbine is described in US2010/0276942. The described system includes a rotatable drive mechanism for a wind turbine which has a differential gearbox with two output shafts, one driving a main electrical generator and one driving a second electrical machine. The input drive to the differential gearbox is from the wind turbine. The input torque from the turbine is measured at the reaction point of the gear box and the measurement used to alter the reaction torque provided by the electrical machine. In use, the electrical machine is operated so that the inertia in the gear box and generator are negated. This allows an almost instantaneous change in the reaction torque and speed provided to the electrical generator, thereby allowing the speed to be constant. However, the system in US'942 requires a complex sensing and control arrangement and the size of the electrical machine needs to be sufficient to account for the full speed and torque range which can be provided by the turbine.

The present invention seeks to provide an electrical generation system which addresses some of the problems known in the art.

In a first aspect the invention provides an electrical generation system, comprising: a differential gearbox having an output drive, an input drive and a third drive which can be driven by or drive a load in use; a generator connected to and drivable by the output drive of the differential gearbox; a variable speed primary power source connected to the input drive of the differential gearbox; a regulating electrical machine which is operable as a motor and a generator connected to the third drive of the differential gearbox; at least one switch through which power is supplied to the electrical machine from the electrical output of the generator; and, a control system which monitors the electrical condition of the generator output, the control system being configured to operate the switch so as to provide power to the electrical machine when the electrical condition falls outside a range which is defined by one or more predetermined limits, wherein the speed torque characteristic of the regulating electrical machine and the gearing of the differential gearbox is such that a rotational equilibrium is achieved between the input drive and the third drive when the electrical machine is connected to the output of the electrical generator, wherein at the point of rotational equilibrium the speed of the output shaft is reduced or increased by a predetermined amount such that the condition of the output from the generator is held within the range.

With the invention it is possible to control the speed of the generator drive to within predetermined limits which allows for a simple, robust and lightweight system to be implemented.

The generator may be any one taken from the group comprising wound field synchronous generator, brushless wound field synchronous generator or permanent magnet generator.

The generator have a power rating in the range bounded by the values 500kVA and 100kVA. The generator may be in the range bounded by 300kVA and 200kVA. The regulator may have a power rating in the range bounded by the 50kVA to 10kVA. The regulator may have a power rating in the range 20kVA to 30kVA. The regulator may have a power rating of approximately 10% of the electrical generator.

The differential gearbox may be an epicyclic differential. The epicyclic differential may be a sun gear, a plurality of planet gears and an annulus outer or ring gear. The planet gears may mesh with the sun gear and the annulus gear. The planet gears may be rotatably mounted on a carrier.

The primary power source (which is also referred to as a primary power drive) may be connected to the carrier. The secondary drive may be connected to the ring gear. The differential gearbox output which drives the electrical generator may be coupled to the sun gear.

The primary drive may be a wind turbine or a water turbine. The water turbine may be used in a tidal or river flow. The primary drive may be a taken from a gas turbine engine. The gas turbine engine may form part of an aeroengine.

The condition of the electrical output of the generator may be characterised by either or both of the voltage or frequency. The monitoring of the electrical output of the generator may be carried out using an appropriate sensor. The sensor may be mounted directly to the generator terminals or at a point on an electrical network which is supplied by the generator.

The predetermined limits may be a specified frequency range. The predetermined limits may be either or both of an upper and lower limit of a desired frequency range. The predetermined upper and lower limits may be 800Hz and 360Hz respectively. The predetermined upper and lower limits may be 700Hz and 400Hz respectively. The predetermined upper and lower limits may be 360Hz to 650Hz.

The predetermined limits may be a specified voltage range. The predetermined limits may be either or both of an upper and a lower limit which define the specified voltage range. The predetermined upper may be one of 270V d.c. 235Vrms, 115Vrms or 28V d.c.

There may be a plurality of upper limits and a plurality of lower limits. Each of the plurality of upper predetermined limits and lower predetermined limits may be different. The difference in the plurality of upper and lower limits may provide the engaging and disengaging of the brake and connection of the electrical machine with some hysteresis to prevent repeatedly switching the regulator in and out of service around a particular predetermined limit.

The generating system may include an anti-rotation device for preventing rotation of the third drive. The anti-rotation device may be operable upon command from the control system. The anti-rotation device may be a brake. The brake may be operable to be in an anti-rotation configuration in which the third is locked, or a disengaged configuration in which the third is free to rotate. When disengaged, the third is substantially unhindered by the brake. The anti-rotation device may be a locking mechanism such as a pin or a ratchet. The electrical machine may provide the anti-rotation device.

The electrical machine may be an induction motor. When the electrical machine is an induction motor, the windings may be provided with an approximate direct current, d.c., to provide the anti-rotation device.

The control system may connect the electrical machine to the output of the generator when the anti-rotation device is disengaged.

The electrical machine may be connectable so as to provide rotation in either or both of a first and a second direction. The electrical motor may be connected via a switching arrangement. When the electrical machine is a three phase motor, the switching arrangement may be operable to switch polarity of two of the phases of the electrical machine.

The torque-speed curve characteristic may be such that the regulating electrical machine operates in a first mode as either a motor or generator upon connection to the electrical output prior to reaching the rotational equilibrium and in a second mode as the other of the motor or generator function.

The electrical machine may receive power from the electrical generator. The electrical machine may be connected directly to the terminals of the electrical generator or the electrical network supplied by the generator. In this way the electrical machine receives power at the frequency produced by the electrical generator.

The anti-rotation device may include a clutch arrangement. The clutch arrangement may be configured to allow the third drive of the differential gearbox to turn.

In a second aspect, the invention provides a method of controlling the electrical output characteristics of an electrical generation system, comprising: a differential gearbox having an output drive, an input drive and a third drive which can be driven by or drive a load in use; a generator connected to and drivable by the output drive of the differential gearbox; a variable speed primary power source connected to the input drive of the differential gearbox; a regulating electrical machine which is operable as a motor and a generator connected to the third drive of the differential gearbox; at least one switch through which power is supplied to the electrical machine from the electrical output of the generator; and, a control system which monitors the electrical condition of the generator output, the control system being configured to operate the switch so as to provide power to the electrical machine when the electrical condition falls outside a range which is defined by one or more predetermined limits, wherein the speed torque characteristic of the regulating electrical machine and the gearing of the differential gearbox is such that a rotational equilibrium is achieved between the input drive and the third drive when the electrical machine is connected to the output of the electrical generator, wherein at the point of rotational equilibrium the speed of the output shaft is reduced or increased by a predetermined amount such that the condition of the output from the generator is held within the range, the method comprising the steps of: determining a desired output range for the electrical generator and setting at least one predetermined limit in relation to the range in the control system; driving the electrical generator using the primary power source; monitoring the output of the electrical generator; providing power to the regulating electrical machine from the output of the electrical generator so as to drive the third drive when the output falls outside of the range.

The method may comprise the further step of connecting the windings of the electrical machine to the electrical output of the main generator at the approximate time of or after the anti-rotation device has been disengaged.

The method may further comprise: setting a second predetermined limit in the control system; monitoring the electrical output of the main generator; applying the anti-rotation device to the third drive; and, disconnecting the electrical machine from the electrical output of the main generator.

The first and second predetermined limits may be different.

Embodiments of the invention are described below with the aid of the following drawings in which:

Figure 1 shows an electrical generation system according to the invention.

Figure 2 shows a torque vs speed characteristic for an induction motor utilised in an embodiment of the present invention.

Figure 3 shows a rotational speed curve for a primary power source and a corresponding electrical frequency curve for an electrical generation system of the invention.

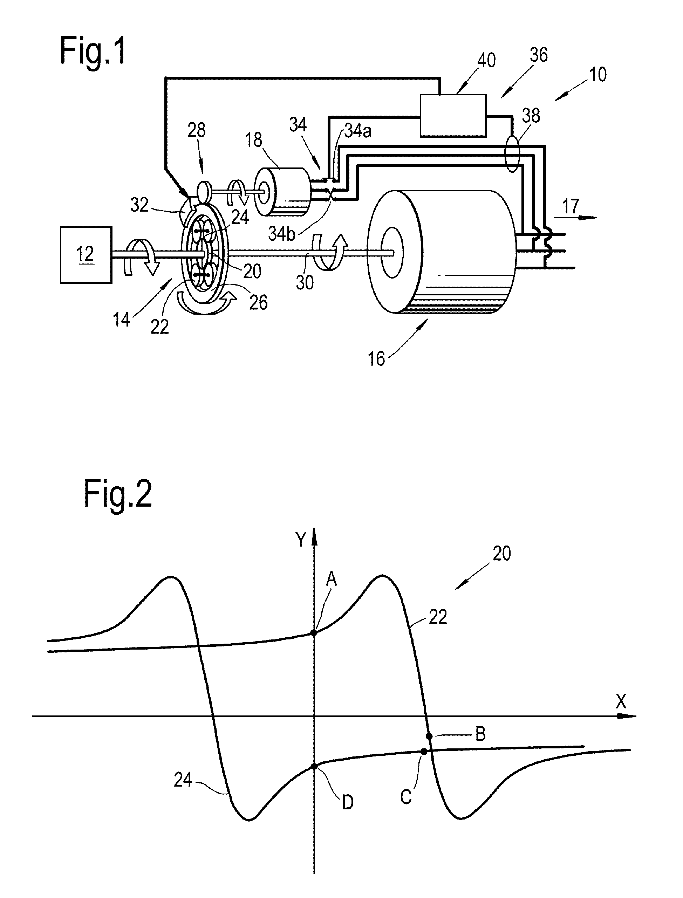

Figure 1 shows an electrical generation system 10 according to the present invention. The system 10 includes a primary power source or drive 12 in the form of a gas turbine engine, a differential gear box in the form of an epicyclic differential 14, an electrical generator 16 supplying an electrical network 17, and a regulating electrical machine in the form of an induction machine 18.

The differential gear box 14 is a sun and planet arrangement, having a sun gear 20, a plurality of planet gears 22 connected by a carrier 24 and an annular, or ring, gear 26. In the described embodiment, the carrier 24 can be thought of as an input drive which is connected to and is driven by the primary drive 12, the annular gear 26 is a third drive connected to the induction motor 18 via a gear and shaft arrangement 28. The electrical generator 16 is connected to and driven by an output drive in the form of the sun gear 20 via a shaft 30.

Also shown in Figure 1 is an anti-rotation device in the form of a brake 32. The brake 32 is operable to have a first configuration, in which the annular gear 26 is locked, and a second, disengaged configuration in which the annular gear 26 is allowed to rotate under the force of the planet gears 22. The brake 32 may be connected directly to the annular gear 26, or, in another embodiment, may be used to lock a drive shaft which connects the induction machine 18 and the annular gear 26 or other suitable member. The brake 32 may take any suitable form such as a ratchet, friction brake or pin lock assembly. Alternatively, the brake may be provided by the induction machine 18 by supplying an approximate direct current to the field windings.

The electrical generator 16 in the described embodiment is a brushless wound-field synchronous machine and as such would include a primary exciter and a rotating transformer of some kind mounted on the same drive shaft as the rotor as is well known in the art (not shown). It will also be appreciated that other electrical generators could be used with the present invention. For example, the generator may be a d.c. generator or a permanent magnet machine.

In the case of a wound field synchronous machine, the output of the electrical generator 16, in particular, the frequency, is dependent on the speed of rotation of the rotor. Hence, as the speed of the primary drive 12 goes up, so does the frequency of the electrical output, and conversely, if the speed of the primary drive 12 goes down, the frequency in the electrical network 17 supplied by the electrical generator 16 also goes down.

It is a recognised problem that many applications require a constant frequency (or voltage is the case may be) so that equipment may function properly. One particular case is on an aircraft where a given fluctuation in the electrical frequency, typically between 360 Hz and 800 Hz is acceptable but going beyond the predetermined limits would interfere with the general operation and the efficiency of the equipment being supplied by a generator. Hence, it is necessary to provide some way of keeping the electrical output of the generator within predetermined limits.

The present invention uses a differential gearbox 14 and a regulating electrical machine 18 to modify the speed of the output drive and to keep the electrical output of the generator within a range using predetermined limits within the electrical output range.

When required, the windings of the induction machine 18 are connected directly to the three phase electrical output of the generator 16, either locally or via the electrical network 17 supplied by the generator 16. In the embodiment, the connection is made via a switching arrangement 34 using a control system 36.

Connecting the induction machine 18 in this way and releasing the brake 32 on the annular gear 26 allows the rotor of the induction machine 18 to rotate under the influence of both the rotating electromagnetic field set up by the stator and mechanical influence of the annular gear 26, which is rotated by the planet gears 22 and primary drive 12. Thus, depending on the torque-speed characteristic of the induction machine 18 and the gearing, a rotational equilibrium is reached between the rotating force of the induction motor 18 and the force of the annular gear 26. This provides a speed change in the output drive 30 of the differential 14 which regulates the speed of the generator's 16 rotor so as to regulate the electrical output provided to the network 17. This is described in more detail below.

Also shown in Figure 1 is a control system 36 which includes a switching arrangement 34, a sensor 38 for sensing the frequency of the electrical output provided by generator 16 and a controller 40 which can be programmed with at least one predetermined limit for assessing the electrical condition of the generator's 16 output.

The switching arrangement 34 includes an inline switch 34a on one phase and a crossover switch 34b on the remaining two phases. This configuration allows the induction machine 18 to be isolated and two of the phases of the machine 18 to be changed. The first and second phase configurations determine which way the rotating electromagnetic field of the stator rotates when the windings are energised. Hence, the induction machine 18 rotor is electrically rotatable in both clockwise and anticlockwise directions, thereby allowing the speed of the output drive 30 to be controlled from an upper end and lower end of the available speed range of the primary drive 12.

The operation of the electrical generation system 10 will now be described with the aid of Figure 2 which shows the torque-speed characteristics 20 for an induction machine connected in a first phase configuration, shown by curve 22 and a second phase configuration, shown by curve 24, using the switching arrangement 34 described above in Figure 1. The X and Y axes shown in Figure 2 represent the rotational speed and torque of the rotor, respectively.

The first phase connection 22 of this embodiment is used when the brake 32 has been disengaged and the annular gear 26 is allowed to rotate. The second phase 24 connection is used in order to correct the speed of the annular gear 26 to zero before applying the brake 32 thereby locking it in place.

Predetermined limits are programmed into the controller 40 of the control system 36. For example, an upper acceptable threshold for the frequency of an electrical network may be 800Hz, so a first upper predetermined limit may be set to 700Hz for the induction machine 18 to be connected and the brake released. A second upper predetermined limit may be set to 600Hz for the induction machine 18 to be disconnected and the annular gear 26 braked. The lower second predetermined limit for disconnecting the induction machine 18 allows for some hysteresis in the control of the system which prevents unnecessary switching the induction machine in and out of the circuit.

When the speed of the primary drive 12 is above the upper predetermined limit, the brake is disengaged upon a command signal from the control system controller 40 and the annular gear 26 and rotor of the induction machine 18 are free to rotate. At this point or shortly after, the windings of the induction machine 18 are connected to the output of the electrical generator 16 via the switching arrangement. This provides electrical power to the induction machine 18 windings at the frequency of the electrical generator's 16 output. This point of operation corresponds with point A on Figure 2.

With the brake 32 released and electrical supply connected to the windings of the induction machine 18, the torque provided by the machine 18 operating as a motor and the annular gear 26 are co-directional and so add to accelerate the annular gear 26. As the speed increases, the operating point of the induction machine will travel along the X axis to the right as shown Figure 2 until the maximum torque is reached. At this point, the torque supplied by the induction machine 18 reduces until the machine stops motoring and begins to generate power into the electrical network.

The generation of power in this way represents a braking force on the annular gear 26 which increases as the speed of the annulus gear increases under the rotative force of the primary drive until a rotational equilibrium is reached (Point B). Once at equilibrium, the rotative force of the annular gear 26 is matched by that of the induction machine 18.

If the rotational speed of the primary drive 12 increases, the torque applied by the induction machine 18 generate more power into the electrical network and so increases the torque produced. Hence, the operating point of the machine travels further along the X axis of Figure 2 and equilibrium is maintained.

As the primary drive 12 decelerates and the second predetermined limit is reached, two of the three phases of the induction machine 18 are reversed (Point C) such that the induction machine operates in the second phase configuration and acts as a motor, thereby aiding the annular gear 26 to slow down. As the rotational speed decreases, a point is reached where the annular gear has slowed sufficiently for the brake to be applied, and the electrical network disconnected from the induction machine windings. This is represented by Point D in Figure 2.

Hence, the regulating induction machine 18 is used as a generator to trim the speed from the upper end of the primary drive speed range with periods of motoring used to control the operational introduction and removal of the machine 18 from the system.

As well as using the induction machine 18 in this way, it is also possible to trim the speed from the lower end of the primary drive speed range using a similar control philosophy, but using the induction machine as a motor to increase the speed of the annular gear 26 rather than a generator to decrease it. In this configuration, the generator function of the induction machine 18 is used to introduce (and remove) the induction machine 18 to the system. Hence, the torque-speed characteristic shown in Figure 2 are still applicable but with the torque being applied in reverse order.

It will be apparent to the skilled person that the design of the induction machine 18 and the associated torque-speed characteristic determines the equilibrium conditions for the system and the amount of speed reduction in the output drive of the differential.

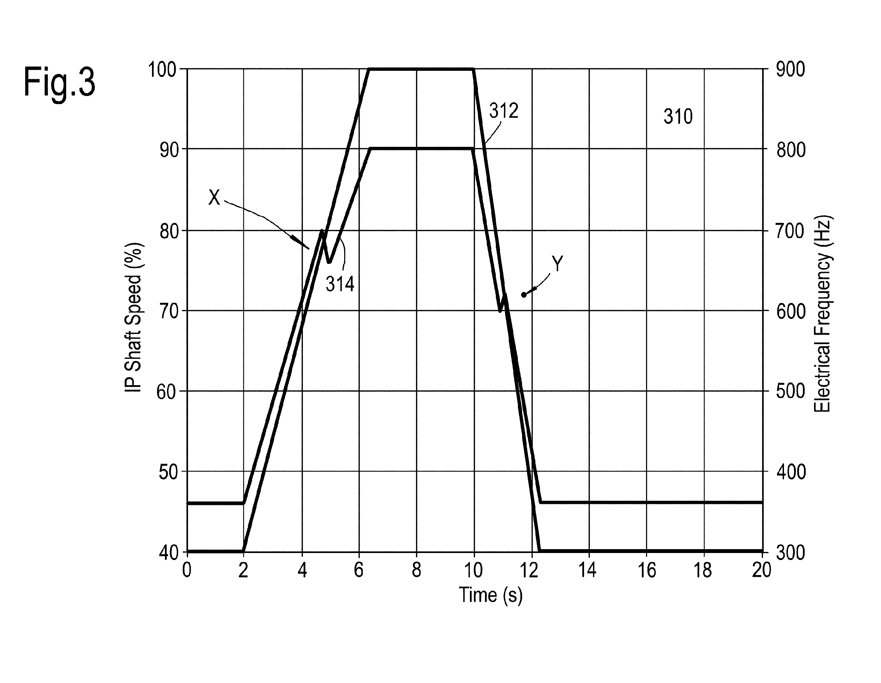

Figure 3 shows the speed range 312 of a primary drive 12 as a percentage of the total speed range available and the associated electrical frequency 314 produced by the generator 16. Without the invention, it can be seen that the full speed range of the drive 12 would result in a frequency range having a lower limit of 300 Hz and an upper limit of 900 Hz which corresponds to 40% and 100% of the primary drive's roational speed, which, in this embodiment, is the intermediate pressure (IP) shaft of a gas turbine engine.

If the acceptable frequency range is between 360Hz and 800Hz, then a gearing can be chosen between the primary drive 12 and the electrical generator 16 such that the lower end of the primary drive 12 speed corresponds to an output frequency of 360 Hz. The upper boundary of the frequency range can then be controlled with the generation system of the invention and a first predetermined upper limit of 700 Hz can be set to monitor for an increase in speed, and 600 Hz for a decrease speed. Having a 100 Hz overlap in this way provides some hysteresis in the system and prevents overuse of the brake 32 and induction machine 18 if the engine is operating around range which corresponds to one of the predetermined limits, for example 700Hz, for a prolonged period.

The operation of the system then proceeds in line with that described for Figure 2, with the torque-speed characteristic and gearing being chosen to result in an upper frequency limit when the of 800Hz which corresponds to the highest rotational speed of the primary drive 12. The switching in and out of the induction machine 18 and brake can be noted at points X and Y, respectively.

A similar approach can be taken to trim the speed from the bottom of the speed range rather than the top, and from both the upper and lower limits of the primary drive 12 speed range.

The relationship between the induction machine 18 and differential gearbox 14 will determine the performance of the system's operation. If the electrical frequency is proportional to the speed of the electrical generator 16, and the generator 16 was geared to the primary drive 12 so that the minimum electrical frequency, 360 Hz, corresponded to the minimum engine speed, 40% of maximum speed of the primary drive would correspond to 900 Hz. If the maximum desired electrical frequency is 800 Hz, as described above, the system should act to reduce the aircraft electrical frequency by 100 Hz. This corresponds to a reduction in the mechanical speed of the electrical generator 16 in rads$^{-1}$ of:

$$\Delta\omega_{WFSM}\left(\Delta f_e = 100Hz\right) = \frac{2\pi\Delta f_e}{\left(\frac{p_{WFSM}}{2}\right)} = \frac{2\pi \times 100}{3} = 209.4$$

Where: $\Delta f_e$ = required reduction in electrical frequency (Hz) and $p_{WFSM}$ = pole number of the generator 16.

If the number of teeth on the annular gear 26 is twice that of the sun gear 20, the speed of the annular gear 26 in rads$^{-1}$ in order to produce the required change in speed of the generator 16 is given by:

$$\Delta\omega_r\left(\Delta f_e = 100Hz\right) = \frac{N_s}{N_r}\Delta\omega_{WFSM} = \frac{1}{2} \times 209.4 = 104.7$$

Where: $N_s$ = number of teeth on the sun gear 20, $N_r$ = number of teeth on the annular gear 26.

The speed of the induction machine 18 must be as high as possible to minimise its size. However, the higher the speed of the induction machine 18, the higher the gear ratio required between the induction machine 18 and the annular gear 26. Therefore, a machine 18 with two pole pairs is used, so that its synchronous speed, in rads$^{-1}$ is given by:

$$\Delta\omega_{IM}\left(f_e = 800Hz\right) = \frac{2\pi f_e}{\left(\frac{p_{IM}}{2}\right)} = \frac{2\pi \times 800}{2} = 2,513$$

Where: $f_e$ = electrical frequency (Hz) $p_{IM}$ = pole number of the induction machine 18.

Therefore, the ideal gear ratio between the induction machine 18 and the annular gear 26 is given by:

$$\frac{N_r}{N_{IM}} = \frac{\Delta\omega_{IM}}{\Delta\omega_r} = \frac{2513}{104.7} = 24$$

The design of the induction machine 18 will be governed by the torque speed characteristic which is required, which, in turn, will depend on the specific application and the point of equilibrium which is required (Point A in Figure 2).

In another embodiment, a converter (which may form part of the controller 40) is used as part of the control system 34 to control the electrical frequency in the induction machine 18 windings. Hence, instead of simply disengaging the brake 32 and connecting the induction machine 18 windings to the electrical network 17, power is fed to the windings through the converter to provide the torque which may be required to provide a particular electrical demand. In particular, torque may be required to allow the responsiveness of the system to be changed such that mechanical stresses can be avoided in the various drive trains associated with the system. Further, the convertor can be configured to provide an approximate direct current, d.c. to the winding of the induction machine 18 such that the rotor is held in a stationary position thereby providing the anti-rotation device.

In yet another embodiment, it may be desirable for the sizing of the induction machine 18 to provide gearing such that the speed output drive 30 is trimmed at the upper and lower ends of the primary drive's 12 speed range. In this instance, a first predetermined limit could be set at 700Hz and a second predetermined limit set at 500Hz. Referring to Figure 2, power would connected to the regulating electrical machine 18 at point A which corresponds to 700Hz such that the rotating electromagnetic field is set up in a first direction. This has the effect of speeding up the annular gear 26 until equilibrium is reached at point B. When the speed of the primary drive descends to a point where the electrical output becomes 500Hz, the phase connection of two phases of the electrical machine is reversed, point C, such that machine decelerates until the lower end of the acceptable frequency range.. This relationship would be maintained until the speed of the primary drive increase to the first upper limit and the phase connection reversed once more.

In this way, the electrical machine would always be active, either trimming speed off the lower end of the speed range or the upper end. It will be appreciated that the brake may be omitted in this instance, or may simply be included as a safety feature which is used in the event of a failure of the induction machine or control system.

The embodiments of the invention described above are not taken as limitations of the invention and are included simply at a sample of a broader inventive concept.

For example, although the embodiments are focussed around aircraft electrical systems and the use with gas turbine engines, this is not a limitation of invention and any variable speed electrical generating system having a primary drive with variable speed may utilise this invention.

The skilled person will appreciate that various combinations of electrical generators and electrical machines could be used. However, the induction machine is particularly advantageous as it allows for a simple and robust system, which, in the simplest embodiment, relies on an electrical connection to the electrical network with no other control.

**Claims**

1.  An electrical generation system, comprising:

    a differential gearbox having an output drive, an input drive and a third drive which can be driven by or drive a load in use;
    a generator connected to and drivable by the output drive of the differential gearbox;
    a variable speed primary power source connected to the input drive of the differential gearbox;
    a regulating electrical machine which is operable as a motor and a generator connected to the third drive of the differential gearbox;
    at least one switch through which power is supplied to the electrical machine from the electrical output of the generator; and,
    a control system which monitors the electrical condition of the generator output, the control system being configured to operate the switch so as to provide power to the electrical machine when the electrical condition falls outside a range which is defined by one or more predetermined limits,

    wherein the speed torque characteristic of the regulating electrical machine and the gearing of the differential gearbox is such that a rotational equilibrium is achieved between the input drive and the third drive when the electrical machine is connected to the output of the electrical generator, wherein at the point of rotational equilibrium the speed of the output shaft is reduced or increased by a predetermined amount such that the condition of the output from the generator is held within the range.

2.  A generation system as claimed in claim 1 wherein the regulating electrical machine is an induction machine.

3.  A generation system as claimed in any of claims 1 or 2 further comprising an anti-rotation device for preventing rotation of the third drive, the anti-rotation device being operable upon command from the control system.

4.  A generation system as claimed in any of claims 1 to 3 wherein the control system is configured to connect the electrical machine to the electrical output of the generator when the anti-rotation device is disengaged.

5.  A generation system as claimed in any of claims 1 to 4 wherein the electrical machine is connectable so as to be electrically rotatable in either of a first and a second direction.

6.  A generation system as claimed in any of claims 1 to 5 wherein the torque-speed characteristic is such that the electrical machine is configured to operate in a first mode as either a motor or generator upon connection to the electrical output of the generator prior to reaching the rotational equilibrium, and configured to operate in a second mode at rotational equilibrium as the other of the motor or generator functions.

7.  A generating system as claimed in any preceding claim further comprising a converter which is configured to supply electrical power to the electrical machine windings.

8.  A generating system as claimed in any of claims 3 to 7 when dependent of 3, wherein the anti-rotation device is a brake or ratchet.

9. A generating system as claimed in any preceding claim wherein the range has an upper limit and a lower limit and the gearing of the differential gearbox is such that the output from the generator is within range at either of the upper or lower limits when the third drive is substantially stationary.

10. An aircraft comprising the electrical generation system as claimed in any of claims 1 to 9.

11. A method of controlling the electrical output characteristics of an electrical generation system, comprising: a differential gearbox having an output drive, an input drive and a third drive which can be driven by or drive a load in use; a generator connected to and drivable by the output drive of the differential gearbox; a variable speed primary power source connected to the input drive of the differential gearbox; a regulating electrical machine which is operable as a motor and a generator connected to the third drive of the differential gearbox; at least one switch through which power is supplied to the electrical machine from the electrical output of the generator; and, a control system which monitors the electrical condition of the generator output, the control system being configured to operate the switch so as to provide power to the electrical machine when the electrical condition falls outside a range which is defined by one or more predetermined limits, wherein the speed torque characteristic of the regulating electrical machine and the gearing of the differential gearbox is such that a rotational equilibrium is achieved between the input drive and the third drive when the electrical machine is connected to the output of the electrical generator, wherein at the point of rotational equilibrium the speed of the output shaft is reduced or increased by a predetermined amount such that the condition of the output from the generator is held within the range, the method comprising the steps of:

> determining a desired output range for the electrical generator and setting at least one predetermined limit in relation to the range in the control system;
> driving the electrical generator using the primary power source;
> monitoring the output of the electrical generator;
> providing power to the regulating electrical machine from the output of the electrical generator so as to drive the third drive when the output falls outside of the range.

12. A method as claimed in claim 11 wherein the generation system further comprises an anti-rotation device to prevent the third drive rotating, the method comprising the further step of connecting the electrical machine to the output of the generator at the approximate time of or after the anti-rotation device has been disengaged.

13. A method as claimed in claims 11 or 12, further comprising:

> setting a first and second predetermined limit;
> providing electrical power to the regulating electrical machine such that a rotating electromagnetic field is established in the machine in a first direction in accordance with the first predetermined limit;
> providing electrical power to the regulating electrical machine such that a rotating electromagnetic field is established in the machine in a second direction in accordance with the second predetermined limit.

14. A method as claimed in claims 11 to 13 further comprising supplying an approximate dc current to the windings of the electrical machine to substantially prevent rotation of the third drive thereby providing the anti-rotation device.

# Fig.1

# Fig.2

# Fig.3

Europäisches
Patentamt

European
Patent Office

Office européen
des brevets

## EUROPEAN SEARCH REPORT

Application Number

EP 12 17 0187

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 283 359 A1 (RWE PILLER GMBH [DE]) 12 February 2003 (2003-02-12) * paragraph [0017]; claims 1,3,5,7; figures 4,6 * | 1,2,7, 11,12,14 | INV. F03D11/02 F16H3/72 |
| X | US 4 488 053 A (CRONIN MICHAEL J [US]) 11 December 1984 (1984-12-11) | 1-5,7,8, 10-12 | |
| A | * abstract; figure 1 * | 6,9,13 | |
| A | US 2 597 357 A (MCCORMICK HAMILTON L) 20 May 1952 (1952-05-20) * figure 1 * | 1-12 | |

TECHNICAL FIELDS
SEARCHED (IPC)

F03D
F16H

The present search report has been drawn up for all claims

| Place of search | Date of completion of the search | Examiner |
|---|---|---|
| Munich | 28 September 2012 | Belz, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 17 0187

This annex lists the patent family members relating to the patent documents cited in the above-mentioned European search report.
The members are as contained in the European Patent Office EDP file on
The European Patent Office is in no way liable for these particulars which are merely given for the purpose of information.

28-09-2012

| Patent document cited in search report | | Publication date | Patent family member(s) | Publication date |
|---|---|---|---|---|
| EP 1283359 | A1 | 12-02-2003 | NONE | |
| US 4488053 | A | 11-12-1984 | NONE | |
| US 2597357 | A | 20-05-1952 | NONE | |

EPO FORM P0459

For more details about this annex : see Official Journal of the European Patent Office, No. 12/82

**EP 2 535 582 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100276942 A